# EUROPÄISCHE PATENTSCHRIFT

(11) **EP 0 530 476 B1**
(45) Veröffentlichungstag und Bekanntmachung des Hinweises auf die Patenterteilung: **13.03.1996**
(21) Anmeldenummer: 92112094.5
(22) Anmeldetag: 15.07.1992
(51) Int. Cl.: G01S 3/80

(54) **Einrichtung und Verfahren zur elektroakustischen Messung der Winkelrichtung vorbeifliegender Geschosse an Luftschleppzielen**
Device and method for electroacoustic angular measurement of ultrasonic shells passing towed air targets
Dispositif et méthode pour la mesure angulaire par électroacoustique de projectiles ultrasoniques passant des avions-cibles toués

(30) Priorität: 02.09.1991 DE 4129447
(43) Veröffentlichungstag der Anmeldung: 10.03.1993
(73) Patentinhaber: Ingenieurbüro für Elektro-Mechanische Technologien Dipl.-Ing. Hartmut Euer, D-82377 Penzberg (DE)
(72) Erfinder: Borberg, Hartmut, W-8000 München 70 (DE); Obrecht, Bernhard, W-8120 Weilheim (DE)
(74) Vertreter: Kern, Wolfgang, Dipl.-Ing.

(56) Entgegenhaltungen:
- DE-A- 3 122 644
- DE-A- 3 823 490

## Beschreibung

Die Erfindung betrifft eine Einrichtung zur elektroakustischen Messung der Winkelrichtung vorbeifliegender überschallschneller Geschosse an Luftschleppzielen. Solche Schleppziele werden für das Übungsschießen auf fliegende Ziele verwendet, wobei eine in das Schleppziel eingebaute Trefferablagesensorik den Passageabstand und gegebenenfalls die Passagerichtung vorbeifliegender Geschosse erfaßt und als Trefferzonenanzeige bzw. Trefferbildanzeige am Boden zur Anzeige bringt.

Solche Luftschleppziele sind als sog. "harte" Schleppziele (starre Schleppkörper) oder "weiche" Schleppziele (Schleppsäcke, Schleppflaggen) gebräuchlich. Dabei gibt es fluglagestabile (z.B. schwerpunktgeschleppte) und nicht fluglagestabile, i.a. rotierende (z.B. nasengeschleppte) Ziele.

Die praktisch wichtigsten Meßverfahren zur Bestimmung der Trefferlage beruhen auf akustischen Meßprinzipien. Das am Luftziel vorbeifliegende überschallschnelle Geschoß führt eine kegelförmige Stoßwelle, den sog. Mach-Kegel, mit sich. Der örtliche und zeitliche Druckverlauf der Stoßwelle ist durch einen steilen Druckanstieg über den statischen Druck (Frontstoß), einen etwa linearen Abfall unter den statischen Druck und einen zweiten steilen Druckanstieg zurück auf den statischen Druck (Heckstoß) gekennzeichnet. Dieser Druckverlauf wird wegen der Form des Oszillogrammes (ähnlich dem Buchstaben "N") als Geschoß-N-Welle bezeichnet. Die Druckamplituden von Frontstoß und Heckstoß der Geschoß-N-Welle sowie der zeitliche Abstand zwischen Frontstoß und Heckstoß sind bekannte Funktionen des Abstandes von der Geschoßbahn.

Auf der Grundlage dieser physikalischen Gegebenheiten ist eine Technik bekannt und eingeführt, nach der der kürzeste Abstand der Geschoßpassage am Ziel (Trefferradius) durch Messung und elektronische Auswertung der Druckamplitude der Geschoß-N-Welle bestimmt wird. Dieses Meßverfahren erlaubt die Zählung der Treffer in kreisringförmigen Trefferzonen um das Luftziel, entsprechend den Ringen einer Schießscheibe.

Die Bestimmung des Trefferbildes, d.h. der einzelnen Trefferpunkte und ihrer Koordinaten auf einer virtuellen Zielscheibe, ist nach diesem Trefferzonenverfahren nicht möglich. Für eine realistische Übungsdurchführung ist jedoch die Kenntnis nicht nur der Treffersummen in Trefferzonen, sondern des tatsächlichen Trefferbildes wünschenswert.

Trefferbild-ermittelnde Meßverfahren auf der Grundlage der räumlichen Anordnung mehrerer Sensoren (Sensor-Array) sind bekannt. Diese bekannten Verfahren haben sich jedoch praktisch nicht durchsetzen können, weil zur Erzielung einer zufriedenstellenden Meßgenauigkeit große Abmessungen des Sensor-Arrays erforderlich sind, die sich mit der Größe und Gestalt der Luftziel-Schleppkörper nicht vertragen.

Eine Einrichtung nach dem Oberbegriff des Patentanspruchs 1 ist aus der DE-A1-38 23 490 bekannt. Bei dieser Einrichtung sind die akustischen Sensoren dreidimensional entsprechend den Ecken eines Tetraeders am Lufischleppziel angeordnet. Die Meßgenauigkeit dieser bekannten Einrichtungläßt jedoch zu wünschen übrig, da die Lage der Sensoren im Raum und zueinander nicht definiert ist und somit nicht ausgeschlossen werden kann, daß ein eindeutiger rechnerischer Rückschluß auf die Einfallsrichtung der Schallwelle und damit auf die gesuchte Trefferwinkelrichtung nicht möglich ist.

Der Erfindung liegt die Aufgabe zugrunde, eine Einrichtung der eingangs erwähnten Art zu schaffen, deren Meßgenauigkeit bei der Bestimmung der Geschoß-Trefferkoordinaten verbessert ist.

Diese Aufgabe wird durch eine Einrichtung mit den Merkmalen des Anspruchs 1 gelöst.

Vorteilhafte Weiterbildungen insbesondere für in der Praxis nichtlagestabil fliegende Sensorringe sind in den Unteransprüchen angegeben.

Trefferradius und Trefferwinkel bilden zusammen die ebenen Polarkoordinaten des Trefferpunktes,so daß damit eine Trefferbildanzeige realisiert werden kann. Dabei kann die erfindungsgemäße Einrichtung zur Trefferwinkel-Messung in einfacher Weise in die Ausrüstung von harten oder weichen Schleppzielen integriert werden.

Erfindungsgemäß sind mindestens drei akustische Sensoren äquidistant auf einem starren Kreisring (Sensorring) angeordnet. Der Sensorring wird mit dem Schleppziel mitgeführt. Die Achse des Sensorringes liegt flugbahnbedingt etwa horizontal. Die Drehorientierung des Sensorringes um diese Ache ist bekannt (z.B. aus der stabilen Fluglage des schwerpunktgeschleppten Schleppzieles).

Die Eintreffzeitpunkte der Geschoß-N-Welle an den einzelnen Sensoren werden elektronisch ermittelt und gestatten den eindeutigen rechnerischen Rückschluß auf die Einfallsrichtung der Schallwelle und damit auf die Richtung zur Flugbahnachse des Geschosses, die zugleich die gesuchte Trefferwinkelrichtung ist.

Die Meßfehler werden erfindungsgemäß minimal, wenn die akustischen Sensoren ihr Empfindlichkeitsmaximum bei Ultraschallfrequenzen haben.

Erfindungsgemäß wird die Bestimmung der gesuchten Winkelrichtung in einem Grob-Fein-Verfahren durchgeführt: Die Grob-Winkelrichtung bestimmt sich aus der Nummer des akustischen Sensors, der zuerst die Geschoß-N-Welle feststellt (die Sensoren auf dem Sensorring seien willkürlich numeriert). Die Fein-Winkelrichtung wird aus dem Quotienten der Schalleintreffzeit-Differenz zu den beiden zu dem bereits ausgezeichneten Sensor jeweils links und rechts benachbarten Sensoren bestimmt.

Dieses Auswertungsverfahren bietet neben seiner Einfachheit den Vorteil, daß es aufgrund der Quotientenauswertung für beliebige Durchmesser des Sensorringes geeignet ist, so daß die Signale von Sensorringen verschiedener Baugrößen mit der gleichen Elektronik ausgewertet werden können. Auch ist das Quotienten-Auswertungsverfahren hinsichtlich der Meßgenauigkeit weitgehend unempfindlich gegenüber Unterschieden in der Beschußrichtung (die indessen erheblichen Einfluß auf die Schalleintreffzeit-Differenzen selbst haben).

Um die Schallausbreitung durch die Luft nicht durch Störungen infolge Körperschall zu stören, ist der Sensorring erfindungsgemäß aus einem körperschalldämpfenden Material, beispielsweise einem Kunststoffmaterial, hergestellt, und die Sensoren sind mit einem ähnlichen Material in den Sensorring eingeklebt oder eingegossen.

Um den Luftwiderstand des Schleppzieles und die Störgeräusche infolge Strömungsturbulenzen niedrig zu halten, sind die Sensoren erfindungsgemäß oberflächenbündig und somit strömungsneutral in den Sensorring eingelassen.

Diese Meßeinrichtung für den Trefferwinkel bietet den Vorteil, in einfacher Weise in zylindrische Konstruktionselemente des Schleppzieles integrierbar zur sein. Insbesondere kann der Sensorring bei Luftschleppzielen integraler Bestandteil des Rumpfzylinders sein; bei Schleppsäcken kann der Sensorring in die Wandung des frontseitigen Elektronikzylinders integriert werden.

Sofern das luftschleppziel nicht lagestabil fliegt, z.B. als nasengeschleppter Zielkörper oder als um die Schleppseilachse rotierender Schleppsack, verändert der Sensorring laufend in unbekannter Weise seine Lage gegenüber der Vertikalen, damit verändert sich auch laufend der Referenzwinkel Null für die Bestimmung des Trefferwinkels. Die unter diesen Umständen erhaltenen Trefferwinkelangaben sind ohne zusätzliche Bestimmung der aktuellen Lageorientierung des Sensorringes nicht verwertbar.

Zur Messung des Lagewinkels des Sensorringes gegenüber der Vertikalen ist erfindungsgemäß ein Vertikalsensor angeordnet. Dieser Vertikalsensor wird erfindungsgemäß dadurch realisiert, daß in fester Verbindung mit dem Sensorring ein Absolut-Winkelsensor angeordnet ist, an dessen Drehachse ein Massependel angeordnet ist. Das elektrische Ausgangssignal des Absolut-Winkelssensors gibt unmittelbar die Orientierung des Pendels relativ zum Sensorring an, damit die Lage des Sensorringes relativ zur Vertikalen. Der Absolut-Winkelsensor kann beispielsweise als Potentiometer, Winkelkodierer oder induktiver Wechselstrom-Drehmelder ausgeführt sein.

Anstelle des Absolut-Winkelsensors kann erfindungsgemäß auch ein Inkremental-Winkelsensor angeordnet sein, der Bewegungs-Winkelschritte meldet. Die Ermittlung der absoluten Winkellage erfolgt in bekannter Weise mittels einer nachgeschalteten Zählelektronik.

Sofern das Luftschleppziel sich in einer regelmäßigen gleichförmigen Umdrehung befindet - ein praktisch häufiger Fall - ist es erfindungsgemäß ausreichend, daß der Vertikalsensor als Pendel mit lediglich einem Referenzmarkensensor ausgeführt wird. Der Referenzmarkensensor kann mittels einer Lichtschranke oder eines induktiven Näherungssensors realisiert sein. Bei jedem Durchgang durch den Drehwinkel Null gibt der Referenzmarkensensor einen kurzzeitigen Nullimpuls, der mit der Drehrichtung kodiert ist (z.B. positiver Impuls bei Drehsinn rechts, negativer Impuls bei Drehsinn links). Der aktuelle Drehwinkel folgt daraufhin aus dem Quotienten aus der Zeitdauer seit dem letzten Nullimpuls und der Zeitdauer zwischen zwei Nullimpulsen.

In einer weiteren konstruktiven Vereinfachung der Erfindung ist das Pendel des genannten Nullimpulsgebers ersetzt durch eine ringförmige Laufbahn mit freilaufender Kugel, Rolle oder Scheibe. An einem Punkt der Laufbahn ist als Referenzmarkensensor eine Lichtschranke oder ein induktiver Näherungssensor angeordnet, der den Passagezeitpunkt und die Passagerichtung der Kugel, Rolle oder Scheibe feststellt.

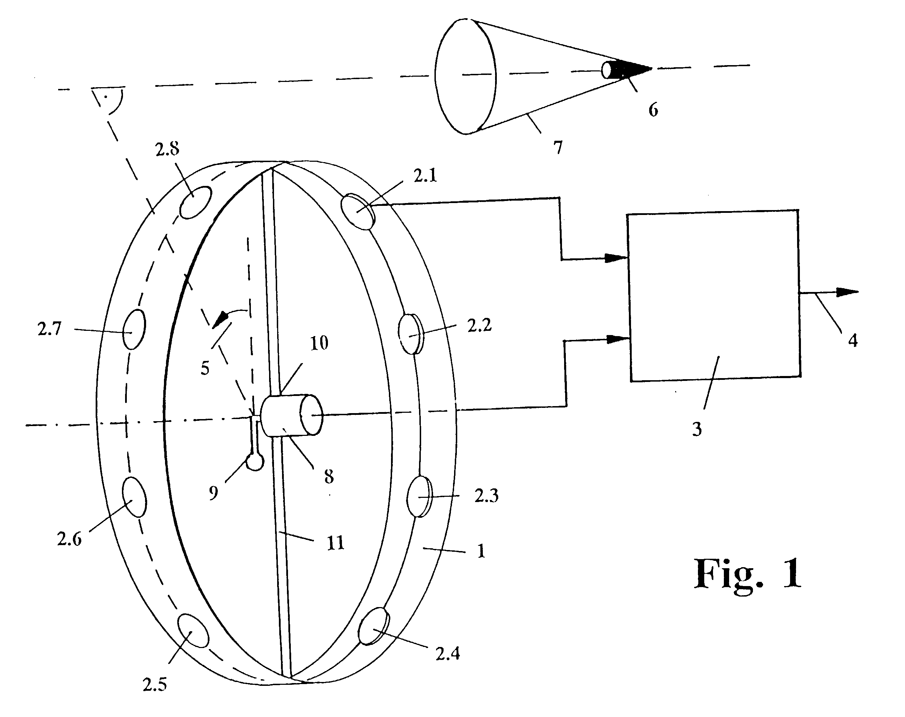

Eine vorteilhafte Ausgestaltung der Erfindung ist in der Abbildung Fig. 1 schematisch dargestelt. Dabei enthält der Sensorring (1) acht akustische Sensoren (2.1 bis 2.8), entsprechend einer Grob-Winkelauflösung von 45°. Die Signale der akustischen Sensoren sind zu einer Auswertungselektronik (3) geführt, deren Ausgangssignal (4) den gesuchten Trefferwinkel (5) bezeichnet. Ein vorbeifliegendes Geschoß (6) führt einen akustischen Stoßwellenkegel (7) mit sich, der den Sensorring (1) unter dem Trefferwinkel (5) erreicht. Es sei angenommen, daß das Schleppziel nicht lagestabil fliegt. Deshalb ist ein Vertikalsensor (8) angeordnet, bestehend aus einem Massependel (9) und einem Absolut-Winkelsensor (10) an einem Befestigungsträger (11). Das Signal des Absolut-Winkelsensors (10) wird ebenfalls der Auswertungselektronik (3) zugeführt.

## Patentansprüche

1. Einrichtung zur elektroakustischen Messung der Winkelrichtung vorbeifliegender überschallschneller Geschosse an Luftschleppzielen,
mit mindestens drei äquidistant zueinander angeordneten akustischen Sensoren (2.1 bis 2.8) zur elektronischen Ermittlung der Eintreffzeitpunkte der Geschoß-N-Welle, welche zur Angabe der Winkelrichtung zur Flugbahnachse des verursachenden Geschosses auswertbar sind,
**dadurch gekennzeichnet, daß**
die mindestens drei akustischen Sensoren (2.1 bis 2.8) in einem starren, mit dem Luftschleppziel mitgeführten Sensorring (1) angeordnet sind, dessen Achse etwa horizontal ausgerichtet und dessen Drehorientierung um diese Achse bekannt ist.

2. Einrichtung nach Anspruch 1, **dadurch gekennzeichnet** daß der die akustischen Sensoren tragende kreisförmige Sensorring (1) aus körperschalldämpfendem Material hergestellt ist.

3. Einrichtung nach Anspruch 1 oder 2, **dadurch gekennzeichnet**, daß die akustischen Sensoren (2.1 bis 2.8) in den Sensorring (1) mittels eines körperschalldämpfenden Materials eingegossen oder eingeklebt sind.

4. Einrichtung nach einem der Ansprüche 1 bis 3, **dadurch gekennzeichnet**, daß die akustischen Sensoren (2.1 bis 2.8) oberflächenbündig in dem Sensorring (1) angeordnet sind.

5. Einrichtung nach einem der Ansprüche 1 bis 4, **dadurch gekennzeichnet**, daß die akustischen Sensoren (2.1 bis 2.8) ihr Empfindfichkeismaximum im Ultraschall-Frequenzbereich haben.

6. Einrichtung nach einem der vorhergehenden Ansprüche, **dadurch gekennzeichnet**, daß in fester Verbindung mit dem Sensorring (1) ein Vertikalsensor (8) angeordnet ist, der die Drehlage des Sensorringes (1) ) relativ zur Vertikalen ermittelt.

7. Einrichtung nach Anspruch 6, **dadurch gekennzeichne**t, daß der Vertikalsensor (8) als Pendel (9) an einem Absolut-Winkelsensor (10) ausgeführt ist.

8. Einrichtung nach Anspruch 6, **dadurch gekennzeichnet**, daß der Vertikalsensor (8) als Pendel an einem Inkremental-Winkelsensor ausgeführt ist.

9. Einrichtung nach Anspruch 6, **dadurch gekennzeichnet**, daß der Vertikalsensor (8) als Pendel mit einem Referenzmarkensensor ausgeführt ist.

10. Einrichtung nach Anspruch 6, **dadurch gekennzeichnet,** daß der Vertikalsensor (8) als ringförmige Laufbahn mit freilaufender Kugel, Rolle oder Scheibe sowie mit einem Refernzmarkensensor ausgeführt ist.

11. Verfahren zur elektroakustischen Messung der Winkelrichtung vorbeifliedender überschallschneller Geschosse an Luftschleppzielen mittels einer Einrichtung mit mindestens drei äquidistant zueinander angeordneten akustischen Sensoren (2.1 bis 2.8) , bei welchem die Eintreffzeitpunkte der Geschoß-N-Welle an den einzelnen Sensoren elektronisch ermittelt und zur Angabe der Winkelrichtung zur Flugbahnachse des verursachenden Geschosses ausgewertet werden, **dadurch gekennzeichnet**, daß die Bestimmung der gesuchten Winkelrichtung durch die mindestens drei akustischen Sensoren (2.1 bis 2.8) in einem starren, mit dem Luftschleppziel mitgeführten Sensorring (1) erfolgt, dessen Achse etwa horizontal ausgerichtet und dessen Drehorientierung um diese Achse ermittelt wird.

12. Verfahren nach Anspruch 11, **dadurch gekennzeichnet**, daß die Bestimmung der gesuchten Winkelrichtung mit Hilfe eines Grob-Fein-Verfahrens derart erfolgt, daß die Grob-Winkelrichtung aus der Nummer des akustischen Sensors bestimmt wird, welcher zuerst die Geschoß-N-Welle feststellt, und die Fein-Winkelrichtung aus dem Quotienten der Schalleintreffzeit-Differenzen zu den beiden benachbarten akustischen Sensoren bestimmt wird.

## Claims

1. Device for electroacoustic angular measurement of ultrasonic shells passing towed air targets, comprising at least three equidistantly arranged acoustical sensors (2.1 to 2.8) for the electronical determination of the arriving times of the projectile-N-wave which are used to evaluate and indicate the angle direction with respect to the flight course axis of the projectile, characterized in that the at least three acoustical sensors (2.1 to 2.8) are positioned in a rigid sensor ring (1) which is transported together with the towed air target wherein the axis of the sensor ring is nearly horizontally positioned and the rotational orientation of the sensor ring with respect to this axis is known.

2. Device according to claim 1, characterized in that the sensor ring (1) supporting the acoustical sensors (2. to 2.8) is manufactured of a sound dampening material.

3. Device according to claims 1 or 2, characterized in that the acoustical sensors (2.1 to 2.8) are moulded or glued into the sensor ring (1) by means of a sound dampening material.

4. Device according to one of claims 1 to 3, characterized in that the acoustical sensors (2.1 to 2.8) are located within the sensor ring (1) such that their surfaces are smooth with the surface of the sensor ring.

5. Device according to one of claims 1 to 4, characterized in that the maximum of sensitivity of the acoustical sensors (2.1 to 2.8) is within the supersonic frequency range.

6. Device according to one of the foregoing claims, characterized in that a vertical sensor (8) is arranged in a fixed connection to the sensor ring (1), which vertical sensor ascertains the rotational position of the sensor ring (1) with respect to the vertical line.

7. Device according to claim 6, characterized in that the vertical sensor (8) is structured to be a pendulum at an absolute-angle sensor (10).

8. Device according to claim 6, characterized in that the vertical sensor (8) is structured to be a pendulum at an incremental-angle sensor.

9. Device according to claim 6, characterized in that the vertical sensor (8) is structured to be a pendulum provided with a reference-mark sensor.

10. Device according to claim 6, characterized in that the vertical sensor (8) is structured to be an annular track provided with a free running ball, roll or disc as well as with a reference-mark sensor.

11. Method for electroacoustic angular measurement of ultrasonic shells passing towed air targets by means of a device comprising at least three equidistantly arranged acoustical sensors (2.1 to 2.8), wherein the arriving times of the projectile-N-wave at the several sensors are electronically ascertained and are used to evaluate and indicate the angle direction with respect to the flight course axis of the projectile, characterized in that the required angle direction is determined by the at least three acoustical sensors (2.1 to 2.8) which are positioned in a rigid sensor ring (1) transported together with the towed air target wherein the axis of the sensor ring is nearly horizontally positioned and the rotational orientation of the sensor ring with respect to this axis is determined.

12. Method according to claim 11, characterized in that the required angle direction is determined by a rough-fine-procedure, wherein the rough-angle direction is determined by means of the number of the acoustical sensor which is the first one ascertaining the projectile-N-wave and wherein the fine-angle direction is determined from the quotient of the sound arrival time differences at the two adjacent acoustical sensors.

## Revendications

1. Dispositif de mesure électroacoustique de la direction angulaire de projectiles ultrasoniques dépassant des cibles aériennes remorquées
comprenant au moins trois capteurs acoustiques (2.1 à 2.8) disposés équidistants les uns des autres et servant à détecter les instants d'arrivée de l'onde N du projectile, lesquels peuvent être évalués pour fournir la direction angulaire de l'axe de trajectoire du projectile qui en est la cause,
caractérisé en ce que
lesdits au moins trois capteurs acoustiques (2.1 à 2.8) sont disposés dans un anneau de détection rigide (1) entraîné avec la cible aérienne remorquée, dont l'axe est dirigé sensiblement horizontalement et dont l'orientation en rotation autour de cet axe est connue.

2. Dispositif selon la revendication 1, caractérisé en ce que l'anneau de détection circulaire (1) supportant les capteurs acoustiques est construit en un matériau amortissant le bruit de structure.

3. Dispositif selon la revendication 1 ou 2, caractérisé en ce que les capteurs acoustiques (2.1 à 2.8) sont scellés ou collés dans l'anneau de détection (1) au moyen d'un matériau amortissant le bruit de structure.

4. Dispositif selon l'une quelconque des revendications 1 à 3, caractérisé en ce que les capteurs acoustiques (2.1 à 2.8) sont disposés à surface affleurante dans l'anneau de détection (1).

5. Dispositif selon l'une quelconque des revendications 1 à 4, caractérisé en ce que les capteurs acoustiques (2.1 à 2.8) ont leur sensibilité maximale dans le domaine des ultrasons.

6. Dispositif selon l'une quelconque des revendications précédentes, caractérisé en ce qu'un capteur vertical (8) qui détecte l'orientation de l'anneau de détection (1) par rapport à la verticale est monté fixe par rapport à l'anneau de détection (1).

7. Dispositif selon la revendication 6, caractérisé en ce que le capteur vertical (8) est un pendule (9) associé à un capteur d'angle absolu (10).

8. Dispositif selon la revendication 6, caractérisé en ce que le capteur vertical (8) est un pendule associé à un capteur d'angle relatif.

9. Dispositif selon la revendication 6, caractérisé en ce que le capteur vertical est un pendule associé à un capteur à repère de référence.

10. Dispositif selon la revendication 6, caractérisé en ce que le capteur vertical (8) est une piste circulaire annulaire à bille, rouleau ou disque libre associée à un capteur à repère de référence.

11. Procédé de mesure électroacoustique de la direction angulaire de projectiles ultrasonores dépassant des cibles aériennes remorquées au moyen d'un dispositif comprenant au moins trois capteurs acoustiques (2.1 à 2.8) disposés équidistants les uns des autres, dans lequel les instants d'arrivée de l'onde N du projectile aux capteurs individuels sont détectés électroniquement et sont évalués pour fournir la direction angulaire de l'axe de trajectoire du projectile qui en est la cause, caractérisé en ce que la détermination de la direction angulaire recherchée est effectuée par lesdits au moins trois capteurs acoustiques (2.1 à 2.8) disposés dans un anneau de détection rigide (1) entraîné avec la cible aérienne remorquée, dont l'axe est dirigé sensiblement horizontalement et dont l'orientation en rotation autour de cet axe est déterminée.

12. Procédé selon la revendication 11, caractérisé en ce que la détermination de la direction angulaire recherchée est effectuée par un procédé approche - précision dans lequel la direction angulaire approchée est déterminée par le numéro du capteur acoustique qui capte en premier l'onde N du projectile, et la direction angulaire précise est déterminée à partir du quotient des différences d'instants d'arrivée aux deux capteurs acoustiques voisins.
